# EUROPÄISCHE PATENTSCHRIFT

(11) **EP 1 212 383 B1**
(45) Veröffentlichungstag und Bekanntmachung des Hinweises auf die Patenterteilung: **07.01.2004**
(21) Anmeldenummer: 00964137.4
(22) Anmeldetag: 07.09.2000
(51) Int. Cl.: C09J 151/00, C08F 6/14, C08F 261/04

(54) **VERFAHREN ZUR HERSTELLUNG VON KLEBEMITTELN MIT VERBESSERTER ADHÄSION**
METHOD FOR PRODUCING ADHESIVES HAVING IMPROVED ADHESION
PROCEDE DE PRODUCTION D'ADHESIFS A ADHERENCE AMELIOREE

(30) Priorität: 09.09.1999 DE 19943104
(43) Veröffentlichungstag der Anmeldung: 12.06.2002
(73) Patentinhaber: Wacker-Chemie GmbH, 81737 München (DE)
(72) Erfinder: KÖHLER, Thomas, 84556 Kastl (DE); HÖFLER, Heinz, 84489 Burghausen (DE)
(74) Vertreter: Schuderer, Michael, Dr.
(86) Internationale Anmeldenummer: PCT/EP2000/008753
(87) Internationale Veröffentlichungsnummer: WO 2001/018143

(56) Entgegenhaltungen:
- EP-A- 0 761 697
- DE-A- 19 649 419
- US-A- 4 133 791

## Beschreibung

Die Erfindung betrifft ein Verfahren zur Herstellung von Klebemitteln mit verbesserter Adhäsion sowie die Verwendung der damit erhältlichen Klebemittel in Papier-, Verpackungs-, Holzund Textilklebstoffen sowie in Bauklebern.

Polyvinylalkohol-stabilisierte Vinylacetat-Ethylen-Copolymere werden in Form deren wässrigen Dispersionen häufig zur Verklebung von Papier bzw. Verpackungsmaterialien eingesetzt. Nachteilig ist allerdings, daß die Adhäsion zur Verklebung mit Kunststoffoberflächen häufig nicht ausreichend ist. Für gewöhnlich werden zur Verbesserung der Adhäsion weichmachende Zusätze zugegeben, das Klebemittel mit Polyacrylatdispersion modifiziert oder durch den Einbau von größeren Mengen Ethylen in das Vinylacetat-Ethylen-Copolymere dessen Glasübergangstemperatur herabgesetzt. Nachteilig bei diesen Maßnahmen ist allerdings die deutliche Verminderung der Kohäsion der Klebemittel.

Aus der DE-A 19825052 ist bekannt, die Adhäsion von Klebemitteln auf der Basis von Polyvinylalkohol-stabilisierten Polymerdispersionen dadurch zu verbessern, daß Vinylester von alpha-verzweigten, tertiären Monocarbonsäuren mit 11 C-Atomen copolymerisiert werden.

In der EP-A 385734 wird vorgeschlagen, zur Verbesserung der Adhäsion an unpolaren Substanzen Klebemittel auf Basis von Vinylacetat-Ethylen-Copolymerdispersionen einzusetzen, welche in Gegenwart einer definiertem Menge an teilverseiftem Polyvinylalkohol und eines nichtionischen Polyoxyethylens mit definiertem HLB-Wert hergestellt worden sind. Nachteilig ist, daß nur eine geringfügige Verbesserung der Adhäsion bei schlechterer Wärmestandfestigkeit erreicht wird.

In der JP-B 95/068504 werden Klebemittel beschrieben, welche 14 bis 30 Gew.-% nichtionogenen Emulgator, bezogen auf den Polymeranteil einer wäßrigen Polymerdispersion enthalten. Der gravierende Nachteil dieser Vorgehensweise ist, daß bei den großen Mengen an zugegebenen Emulgator die Abbindung und die Wärmestandfestigkeit drastisch verschlechtert werden.

Es bestand die Aufgabe, die Adhäsion von Klebemitteln, insbesondere auf der Basis von Polyvinylalkohol-stabilisierten Vinylacetat-Ethylen-Copolymeren, zu verbessern, ohne einen dramatischen Abfall der Kohäsion zu erhalten.

Gegenstand der Erfindung ist ein Verfahren zur Herstellung von Klebemitteln mit verbesserter Adhäsion, in Form deren wässrigen Dispersionen oder in Wasser redispergierbaren Dispersionspulver, durch Emulsionspolymerisation von einem oder mehreren Monomeren aus der Gruppe der Vinylester von unverzweigten und verzweigten Carbonsäuren mit 1 bis 12 C-Atomen, der Ester der Acrylsäure und Methacrylsäure mit verzweigten und unverzweigten Alkoholen mit 1 bis 12 C-Atomen, Vinylaromaten, Vinylhalogenide, Diene und alpha-Olefine, in Gegenwart von Polyvinylalkohol und gegebenenfalls Trocknung der damit erhältlichen Dispersion, dadurch gekennzeichnet, daß nach Abschluß der Polymerisation zu der Dispersion 0.3 bis 3.0 Gew.-% bezogen auf das Gesamtgewicht der Dispersion, ein oder mehrere Emulgatoren aus der Gruppe umfassend Alkylsulfate mit 8 bis 18 C-Atomen, Alkyl- und Alkylarylethersulfate mit 8 bis 18 C-Atomen im hydrophoben Rest und 1 bis 50 Ethylenoxideinheiten, Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest, Alkyl- und Alkylarylphosphate mit 8 bis 20 C-Atomen im organischen Rest, Alkylether- und Alkylaryletherphosphate mit 8 bis 20 C-Atomen im Alkyl- oder Alkylarylrest und 1 bis 50 EO-Einheiten, Alkylpolyglykolether bevorzugt mit 5 bis 40 EO-Einheiten und Alkylresten mit 8 bis 20 C-Atomen, Alkylarylpolyglykolether mit 5 bis 40 EO-Einheiten und 8 bis 20 C-Atomen in den Alkyl- und Arylresten, zugegeben werden.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9, VeoVa10 (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethyl-hexylacrylat. Besonders bevorzugt sind Methylacrylat, Methylmethacrylat, n-Butylacrylat und 2-Ethylhexylacrylat.

Bevorzugte Diene sind 1,3-Butadien und Isopren. Als Olefine bevorzugt sind Ethen und Propen. Bevorzugte Vinylaromaten sind Styrol, Methylstyrol, Vinyltoluol, insbesondere Styrol. Als Vinylhalogenid wird Vinylchlorid bevorzugt.

Gegebenenfalls können noch 0.05 bis 10.0 Gew.-%, bezogen auf das Gesamtgewicht der Monomeren, Hilfsmonomere aus der Gruppe umfassend ethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamidopropansulfonat und N-Vinylpyrrolidon copolymerisiert werden.

Weitere Beispiele für Hilfsmonomere in den angegebenen Mengen sind nachvernetzende Comonomere wie Acrylamidoglykolsäure (AGA), Methacrylamidoglykolsäuremethylester (MAGME), N-Methylolacrylamid (NMA), N-Methylolmethacrylamid (NMMA), N-Methylolallylcarbamat, Alkylether von N-Methylolacrylamid oder N-Methylolmethacrylamid wie deren Isobutoxyether oder n-Butoxyether. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat. Bevorzugt werden die vernetzenden Comonomere in einer Menge von 0.1 bis 3.0 Gew.-%, bezogen auf das Gesamtgewicht der Comonomere, eingesetzt.

Weitere Beispiele für Hilfsmonomere in den angegebenen Mengen sind hydrophobierende und anvernetzende Alkoxysilan-funktionelle Monomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy-, Methoxyethylen-, Ethoxyethylen-, Methoxypropylenglykolether- und Ethoxypropylenglykolether-Reste enthalten sein können. Bevorzugt werden Vinyltriethoxysilan und gamma-Methacryloxypropyltriethoxysilan.

Die Polymerzusammensetzung wird im allgemeinen so gewählt, daß eine Glasübergangstemperatur Tg von -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3nd Edition, J. Wiley & Sons, New York (1989) aufgeführt.

Bevorzugte Monomerzusammensetzungen enthalten:
Vinylacetat, oder
Vinylacetat und Ethylen mit 40 bis 99 Gew.-% Vinylacetat und einem Ethylengehalt von 1 bis 60 Gew.-%; oder
Ethylen und Vinylchlorid mit einem Ethylengehalt von 1 bis 40 Gew.-% und einem Vinylchlorid-Gehalt von 50 bis 90 Gew.-%; oder
Vinylacetat und weitere Vinylester mit 30 bis 75 Gew.-% Vinylacetat und 1 bis 50 Gew.-% eines oder mehrerer copolymerisierbarer Vinylester aus der Gruppe umfassend Vinyllaurat, Vinylpivalat, Vinyl-2-ethylhexansäureester, Vinylester einer alpha-verzweigten Carbonsäure mit 5 bis 11 C-Atomen, gegebenenfalls noch 1 bis 40 Gew.-% Ethylen; oder
Vinylacetat und Acrylsäureester mit 30 bis 90 Gew.-% Vinylacetat und 1 bis 60 Gew.-% Acrylsäureester, insbesonders n-Butylacrylat oder 2-Ethylhexylacrylat, gegebenenfalls noch 1 bis 40 Gew.-% Ethylen; oder
n-Butylacrylat oder 2-Ethylhexylacrylat; oder Methylmethacrylat und n-Butylacrylat und/oder 2-Ethylhexylacrylat; oder
Vinylchlorid und Acrylsäureester, insbesonders n-Butylacrylat oder 2-Ethylhexylacrylat; oder
Styrol und Butadien mit einem Styrol-Gehalt von 10 bis 70 Gew.-%; oder
Styrol und Acrylsäureester wie n-Butylacrylat oder 2-Ethylhexylacrylat mit einem Styrol-Gehalt von jeweils 10 bis 70 Gew.-%.
Die Angaben in Gew.-% addieren sich dabei gegebenenfalls mit dem Anteil an den genannten Hilfsmonomeren auf 100 Gew.-% auf.

Am meisten bevorzugt wird die Copolymerisation von Vinylacetat und Ethylen mit 40 bis 99 Gew.-% Vinylacetat und einem Ethylengehalt von 1 bis 60 Gew.-%, wobei gegebenenfalls noch ein oder mehrere der genannten Hilfsmonomere copolymerisiert werden können.

Geeignete Emulgatoren sind anionische, kationische oder nichtionische Emulgatoren oder deren Gemische, beispielweise:
1) Alkylsulfate, besonders solche mit einer Alkylkettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl- bzw. Alkylarylrest und 1 bis 50 EO-Einheiten.
4) Alkylpolyglykolether bevorzugt mit 5 bis 40 EO-Einheiten und Alkylresten mit 8 bis 20 C-Atomen.
5) Alkylarylpolyglykolether bevorzugt mit 5 bis 40 EO-Einheiten und 8 bis 20 C-Atomen in den Alkyl- und Arylresten.

Bevorzugt werden Alkylpolyglykolether, besonders bevorzugt mit 5 bis 40 EO-Einheiten und Alkylresten mit 8 bis 20 C-Atomen, Alkylarylpolyglykolether, besonders bevorzugt mit 5 bis 40 EO-Einheiten und 8 bis 20 C-Atomen in den Alkyl- und Arylresten, wie Nonylphenolethoxylate und Isotridecylethoxylate mit 1 bis 50 Ethylenoxideinheiten. Ebenfalls bevorzugt werden Ester und Halbester der Sulfobernsteinsäure mit einwertigen Alkoholen, Alkylphenolen mit 4 bis 15 C-Atomen im Alkylrest, oder ethoxylierten Alkoholen.

Die Herstellung nach dem Emulsionspolymerisationsverfahren wird in herkömmlichen Reaktoren oder Druckreaktoren in einem Temperaturbereich von 30°C bis 120°C durchgeführt und mit den für die Emulsionspolymerisation üblicherweise eingesetzten Methoden eingeleitet. Im Falle der Copolymerisation von gasförmigen Monomeren wie Ethylen wird vorzugsweise bei einem Druck von 5 bis 85 bar(abs.) gearbeitet. Die Initiierung erfolgt mittels der gebräuchlichen, zumindest teilweise wasserlöslichen Radikalbildner, die vorzugsweise in Mengen von 0.01 bis 3.0 Gew.-% bezogen auf das Gesamtgewicht der Monomeren, eingesetzt werden. Beispiele hierfür sind Kaliumpersulfat, Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew.-%, bezogen auf das Gesamtgewicht der Monomeren, Reduktionsmittel kombiniert werden. Geeignet sind zum Beispiel Alkaliformaldehydsulfoxylate und Ascorbinsäure, Isoascorbinsäure. Bei der Redoxinitiierung werden dabei vorzugsweise eine oder beide Redox-Katalysatorkomponenten während der Polymerisation dosiert.

Die Polymerisation erfolgt in Gegenwart von Polyvinylalkohol als Schutzkolloid, im allgemeinen in einer Menge von 0.1 bis 15 Gew.-%, vorzugsweise 1 bis 10 Gew.-%, bezogen auf das Gesamtgewicht der Monomere. Bevorzugt werden teilverseifte Polyvinylalkohole mit einem Gehalt von 75 bis 95 Mol-%, Vinylalkoholeinheiten und einer Höppler-Viskosität von 3 bis 60 mPas (4 %-ige wässrige Lösung, Methode nach Höppler gemäß DIN 53015), gegebenenfalls in Kombination mit vollverseiften Polyvinylalkoholen mit einem Hydrolysegrad von größer 95 Mol-%, vorzugsweise 98 bis 100 Mol-%.

Die Polymerisation wird bevorzugt ohne Emulgator durchgeführt. Es könne aber auch alle üblicherweise bei der Emulsionspolymerisation verwendeten Emulgatoren während der Polymerisation eingesetzt werden. Geeignete Emulgatoren sind die oben erwähnten anionischen, kationischen und nichtionischen Emulgatoren, in den dafür üblichen Mengen von 0.1 bis 6 Gew.-%, bezogen auf das Gesamtgewicht der Monomeren. Der für die Polymerisation gewünschte pH-Bereich, der im allgemeinen zwischen 2.5 und 10, vorzugsweise 3 und 8, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 75 %.

Nach Abschluß der Polymerisation werden 0.3 bis 3.0 Gew.-%, vorzugsweise 0.6 bis 1.5 Gew.-%, jeweils bezogen auf das Gesamtgewicht der Dispersion, ein oder mehrere Emulgatoren aus der Gruppe der oben genannten anionischen, kationischen und nichtionischen Emulgatoren zugegeben.

Zur Herstellung von pulverförmigen Klebemitteln kann die mit Emulgator modifizierte, wässrige Dispersion anschließend getrocknet werden. Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad, gewählt.

Zur Sprühtrocknung wird die Dispersion des Polymerisats mit einem Festgehalt von vorzugsweise 20 % bis 75 % gemeinsam mit Schutzkolloiden als Verdüsungshilfe versprüht und getrocknet werden. Als Schutzkolloide können dabei beispielsweise teilverseifte Polyvinylalkohole, Polyvinylpyrrolidone, Stärken, Melaminformaldehydsulfonate, Naphthalinformaldehydsulfonate eingesetzt werden. Bevorzugt werden bei diesem Verfahrensschritt 5 bis 20 Gew.-% Schutzkolloid, bezogen auf das Polymerisat, zugesetzt. Gegebenenfalls können noch Zusätze dem Polymerpulver zugegeben werden. Beispiele für Zusatzstoffe zur Modifizierung sind Antiblockmittel, Farbstoffe, Pigmente, Weichmacher, Verfilmungshilfsmittel, Antischaummittel, Katalysatoren, Rheologiehilfsmittel, Verdickungsmittel und Haftmittel.

Die erfindungsgemäßen wässrigen Dispersionen und in Wasser redispergierbaren Redispersionspulver eignen sich als Klebemittel zum Verkleben unterschiedlicher Substrate; beispielsweise Holz, Pappe, Papier und Fasermaterialien. Besonders geeignet sind die Dispersionen und Pulver als Papierklebstoffe, Verpakkungsklebstoffe, Buchbindeklebstoffe, Holzklebstoffe, Parkettklebstoffe, als Klebemittel für Fasermaterialien und als Klebemittel im Baubereich, beispielsweise Fliesenkleber.

Für diese Anwendungen können die Dispersionen bzw. Pulver mit den entsprechenden Zusatzstoffen modifiziert werden. Geeignete Zusatzstoffe sind Füllstoffe wie Kreide oder Gips. Weiter können Netzmittel, Dispergiermittel, Verdicker, Entschäumer und/oder Konservierungsstoffe zugegeben werden.

Überraschend ist die verbesserte Adhäsion der Klebrohstoffe auf unterschiedlichen Substraten, die bei nachträglichem Zusatz bereits sehr geringer Mengen an Emulgatoren beobachtet wird. Werden die Emulgatoren bereits während der Polymerisation der Polymerdispersion eingesetzt, so tritt dieser Effekt der Adhäsionsverbesserung in weit geringerem Ausmaß auf, und Abbindegeschwindigkeit und Kohäsion nehmen deutlich ab. Bei Einsatzmengen oberhalb 1.5 Gew.-% Emulgator, bezogen auf Dispersion, bleibt die Adhäsionssteigerung zwar erhalten, aber Abbindegeschwindigkeit und Kohäsion nehmen im Vergleich zur unmodifizierten Dispersion ab.

### Die nachfolgenden Beispiele dienen zur weiteren Erläuterung der Erfindung:

### Herstellung der Klebemitteldispersionen:

In einem Druckreaktor wurden 5 Gewichtsteile eines teilverseiften Polyvinylalkohols mit einem Hydrolysegrad von 90 Mol%, 104 Gewichtsteile Wasser und 100 Gewichtsteile Vinylacetat vorgelegt. Es wurde auf 50°C aufgeheizt und Ethylen mit einem Druck von 50 bar aufgepreßt. Nach Erreichen des Temperaturgleichgewichts wurde eine Lösung von 0.2 Gewichtsteilen Kaliumpersulfat in 5.8 Gewichtsteilen Wasser und eine Lösung von 0.1 Gewichtsteilen Ascorbinsäure in 5.8 Gewichtsteilen Wasser zudosiert. Nach Beendigung der Polymerisation resultierte eine Dispersion mit einem Feststoffgehalt von 55 % und einer Copolymerzusammensetzung von 18 Gew.-% Ethylen und 82 Gew.-% Vinylacetat.

Die Klebemittel für die Beispiele 2 bis 10, und die Vergleichsbeispiele 11 und 15, wurden durch nachträgliche Zugabe von Emulgator in der in Tabelle 1 angegebenen Art und Menge (Gew.-% Emulgator bezogen auf Gesamtgewicht der Polymerdispersion), hergestellt.
Für die Klebemittel der Vergleichsbeispiele 12 bis 14 wurden die angegebenen Emulgatoren in der angegebenen Menge bereits während der Polymerisation zugegeben.
In Vergleichsbeispiel 1 wurde weder während, noch nach der Polymerisation Emulgator zugegeben.

### Zur Testung der Klebemittel wurden folgende Testverfahren eingesetzt:

### Bestimmung der Haftungssumme (HS):

Papierteststreifen (10 mm x 50 mm) wurden mit je 50 µm Schichtdicke der zu prüfenden Klebstoffe bestrichen und auf 7 verschiedene Kunststoffolien geklebt. Nach 2 Stunden Trockenzeit wurde die Teststreifen abgezogen und dabei die Haftfestigkeit wie folgt beurteilt:
1 = sehr gute Haftung, 100 % Materialausriß
2 = gute Haftung, überwiegend Materialausriß
3 = Haftung, Trennung mit Widerstand ohne Materialausriß
4 = keine Haftung, Abplatzen
Durch Addition der 7 Beurteilungswerte wurde die Haftungssumme erhalten.

Bestimmung der Abbindegeschwindigkeit (AZG):
Während des Abbindevorganges eines Dispersionsklebstoffes nimmt die Festigkeit der Klebung zu. Der Abbindevorgang kann durch die Änderung der Festigkeit einer Klebfuge in Abhängigkeit von der Zeit beschrieben werden. Dazu wurde die Zeit bestimmt, bei der einer Verklebungsfläche von 1 cm² einer beschleunigungsfreien Belastung von 2 N senkrecht zur Klebfläche gerade standhält. Der Prüfvorgang wurde solange wiederholt, bis die kürzeste Abbindezeit auf ± 0.2 sec. eingegrenzt war.

Bestimmung der Wärmestandfestigkeit (Kohäsion, WSF):
Es wurden 6 Prüfkörper mit einer verklebten Fläche von je 9 cm² hergestellt. Dazu versah man je zwei Sperrholzstäbchen (125 mm x 30 mm x 4 mm) auf einer Länge von 30 mm mit einem Klebstoffauftrag von 100 µm Schichtdicke, lagerte diese geschlossen 1 Minute ohne Preßdruck und anschließend 30 min mit einem Preßdruck von 0.2 N/mm². Die Prüfkörper wurden daraufhin 7 Tage bei 23°C und 50 % Luftfeuchtigkeit gelagert und vor der Prüfung 4 Stunden bei 70 + 0.5°C in einem Umlufttrokkenschrank temperiert. Nach der Lagerung wurde mit den Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebfestigkeit T errechnet sich aus T = F_{Max}/A, wobei A die geklebte Prüffläche in mm² ist.

Die Testergebnisse sind in Tabelle 1 zusammengefaßt:
Der Vergleich der Ergebnisse von Beispiel 2 bis 6 mit dem von Vergleichsbeispiel 1 zeigt, daß bereits bei geringen Mengen und nachträglichem Zusatz von Emulgator eine deutliche Verbesserung der Adhäsion (HS) erhalten wird, bei gleichzeitg allenfalls geringfügig verringerter Kohäsion (WSF).
Dieser Effekt wird besonders deutlich bei Einsatzmengen von 0.6 Gew.-% bis 1.5 Gew.-% (Beispiele 2-6, 8, 9), wobei ein Optimum bezüglich Adhäsion (HS), Abbindegeschwindigkeit (AZG) und Kohäsion (WSF) erhalten wird .
Unterhalb von 0.6 Gew.-% (Beispiel 7) erhält man keine signifikante Erhöhung der Adhäsion.
Bei Zugabemengen von mehr als 3.0 Gew.-% (Vergleichsbeispiel 11, 15) wird zwar die Adhäsion noch verbessert, aber mit deutlich erhöhter Abbindegeschwindigkeit (AZG) und dramatischem Abfall der Kohäsion (V.bsp. 15).
Der Vergleich von Beispiel 2 mit Vergleichsbeispiel 14 zeigt, daß die Verbesserung der Adhäsion nur bei nachträglicher Zugabe des Emulgators eintritt.

**Tabelle 1:**

| Beispiel | Emulgator | HS | AZG | WSF |
|---|---|---|---|---|
| V.Bsp. 1 | - - - | 22 | 2.2 | 2.4 |
| Bsp. 2 | 1.0 % Emulgator 1 | 16 | 2.2 | 2.3 |
| Bsp. 3 | 1.0 % Emulgator 2 | 19 | 3.4 | 2.1 |
| Bsp. 4 | 1.0 % Emulgator 3 | 16 | 2.6 | 2.0 |
| Bsp. 5 | 1.0 % Emulgator 4 | 17 | 4.4 | 2.2 |
| Bsp. 6 | 1.0 % Emulgator 5 | 16 | 2.0 | 2.3 |
| Bsp. 7 | 0.3 % Emulgator 1 | 22 | 2.2 | 2.4 |
| Bsp. 8 | 0.6 % Emulgator 1 | 21 | 2.2 | 2.3 |
| Bsp. 9 | 1.5 % Emulgator 1 | 16 | 2.6 | 2.2 |
| Bsp. 10 | 3.0 % Emulgator 1 | 15 | 4.4 | 2.2 |
| V.Bsp. 11 | 5.0 % Emulgator 1 | 15 | 4.8 | 2.2 |
| V.Bsp. 12 | 0.5 % Emulgator 2 einpol. | 22 | 1.8 | 2.0 |
| V.Bsp. 13 | 0.5 % Emulgator 1 einpol. | 20 | 2.0 | 2.2 |
| V.Bsp. 14 | 1.0 % Emulgator 1 einpol. | 20 | 2.1 | 2.0 |
| V.Bsp. 15 | 15 % Emulgator 1 | 7 | 16.1 | 1.1 |
| V.Bsp. 16 | 1.0 % Weichmacher | 20 | 2.0 | 2.4 |
| % = Emulgatorzusatz in % Feststoff auf wässrige Dispersion; | | | | |
| HS = Haftungssumme, AZG = Abbindegeschwindigkeit in sec, WSF = Wärmestandfestigkeit (Kohäsion) in N/mm². | | | | |
| Emulgator 1 = Isotridecylethoxylat mit 15 Ethylenoxid-Einheiten (Genapol X 150) | | | | |
| Emulgator 2 = Isotridecylethoxylat mit 36 Ethylenoxid-Einheiten (Genapol X 360) | | | | |
| Emulgator 3 = Sulfosuccinathalbester mit ethoxyliertem Alkohol (Aerosol A 102) | | | | |
| Emulgator 4 = Diisohexylsulfosuccinat (Aerosol MA) Weichmacher = Dibutyladipat (DBA) | | | | |
| Emulgator 5 = Isotridecylethoxylat mit 5 Ethylenoxid-Einheiten (Genapol X 50) | | | | |

## Patentansprüche

1. Verfahren zur Herstellung von Klebemitteln mit verbesserter Adhäsion, in Form deren wässrigen Dispersionen oder in Wasser redispergierbaren Dispersionspulver, durch Emulsionspolymerisation von einem oder mehreren Monomeren aus der Gruppe der Vinylester von unverzweigten und verzweigten Carbonsäuren mit 1 bis 12 C-Atomen, der Ester der Acrylsäure und Methacrylsäure mit verzweigten und unverzweigten Alkoholen mit 1 bis 12 C-Atomen, Vinylaromaten, Vinylhalogenide, Diene und alpha-Olefine, in Gegenwart von Polyvinylalkohol und gegebenenfalls Trocknung der damit erhältlichen Dispersion, **dadurch gekennzeichnet,**
**daß** nach Abschluß der Polymerisation zu der Dispersion 0.3 bis 3.0 Gew.-%, bezogen auf das Gesamtgewicht der Dispersion, ein oder mehrere Emulgatoren aus der Gruppe umfassend Alkylsulfate mit 8 bis 18 C-Atomen, Alkyl- und Alkylarylethersulfate mit 8 bis 18 C-Atomen im hydrophoben Rest und 1 bis 50 Ethylenoxideinheiten, Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest, Alkyl- und Alkylarylphosphate mit 8 bis 20 C-Atomen im organischen Rest, Alkylether- und Alkylaryletherphosphate mit 8 bis 20 C-Atomen im Alkyl- oder Alkylarylrest und 1 bis 50 EO-Einheiten, Alkylpolyglykolether bevorzugt mit 5 bis 40 EO-Einheiten und Alkylresten mit 8 bis 20 C-Atomen, Alkylarylpolyglykolether mit 5 bis 40 EO-Einheiten und 8 bis 20 C-Atomen in den Alkyl- und Arylresten, zugegeben werden.

2. Verfahren nach Anspruch 1, **dadurch gekennzeichnet,daß** als Monomere Zusammensetzungen mit Vinylacetat; oder Vinylacetat und Ethylen mit 40 bis 99 Gew.-% Vinylacetat und einem Ethylengehalt von 1 bis 60 Gew.-%; oder Ethylen und Vinylchlorid mit einem Ethylengehalt von 1 bis 40 Gew.-% und einem Vinylchlorid-Gehalt von 50 bis 90 Gew.-%; oder Vinylacetat und weitere Vinylester mit 30 bis 75 Gew.-% Vinylacetat und 1 bis 50 Gew.-% eines oder mehrerer copolymerisierbarer Vinylester aus der Gruppe umfassend Vinyllaurat, Vinylpivalat, Vinyl-2-ethylhexansäureester, Vinylester einer alpha-verzweigten Carbonsäure mit 5 bis 11 C-Atomen, gegebenenfalls noch 1 bis 40 Gew.-% Ethylen; oder Styrol und Butadien mit einem Styrol-Gehalt von 10 bis 70 Gew.-%; oder Styrol und Acrylsäureester mit einem Styrol-Gehalt von jeweils 10 bis 70 Gew.-%; gegebenenfalls in Gegenwart von Hilfsmonomeren, polymerisiert werden.

3. Verfahren nach Anspruch 2, **dadurch gekennzeichnet, daß** als Hilfsmonomere nachvernetzende Comonomere wie Acrylamidoglykolsäure, Methacrylamidoglykolsäuremethylester, N-Methylolacrylamid, N-Methylolmethacrylamid, N-Methylolallylcarbamat, Alkylether von N-Methylolacrylamid, N-Methylolmethacrylamid und/oder vorvernetzende, mehrfach ethylenisch ungesättigte Comonomere wie Divinyladipat, Diallylmaleat, Allylmethacrylat, Triallylcyanurat in einer Menge von 0.05 bis 10.0 Gew.-%, bezogen auf das Gesamtgewicht der Monomere copolymerisiert werden.

4. Verfahren nach Anspruch 3, **dadurch gekennzeichnet, daß** als Emulgatoren Nonylphenolethoxylate und Isotridecylethoxylate mit 1 bis 50 Ethylenoxideinheiten, Ester und Halbester der Sulfobernsteinsäure mit einwertigen Alkoholen, Alkylphenolen mit 4 bis 15 C-Atomen im Alkylrest oder ethoxylierten Alkoholen nach Abschluß der Polymerisation zur wässrigen Dispersion zugegeben werden.

5. Verfahren nach Anspruch 1 bis 4, **dadurch gekennzeichnet, daß** nach Abschluß der Polymerisation 0.6 bis 1.5 Gew.-%, bezogen auf das Gesamtgewicht der Dispersion, Emulgator zur Dispersion zugegeben werden.

6. Verfahren nach Anspruch 1 bis 5, **dadurch gekennzeichnet, daß** die Polymerisation in Gegenwart von teilverseiftem Polyvinylalkohole mit einem Gehalt von 75 bis 95 Mol-%, Vinylalkoholeinheiten und einer Höppler-Viskosität von 3 bis 60 mPas erfolgt.

7. Verfahren nach Anspruch 6, **dadurch gekennzeichnet, daß** die teilverseiften Polyvinylalkohole mit einem Gehalt von 75 bis 95 Mol-% Vinylalkoholeinheiten in Kombination mit vollverseiften Polyvinylalkoholen mit einem Hydrolysegrad von größer 95 Mol-% bis 100 Mol-% eingesetzt werden.

8. Verfahren nach Anspruch 1 bis 7, **dadurch gekennzeichnet, daß** die Polymerisation in Gegenwart von anionischen, kationischen oder nichtionischen Emulgatoren durchgeführt wird.

9. Verfahren nach Anspruch 1 bis 8, **dadurch gekennzeichnet, daß** zur Herstellung von pulverförmigen Klebemitteln die mit Emulgator modifizierte, wässrige Dispersion getrocknet wird.

10. Verwendung der Verfahrensprodukte nach Anspruch 1 bis 9 als Papierklebstoffe, Verpackungsklebstoffe und Buchbindeklebstoffe.

11. Verwendung der Verfahrensprodükte nach Anspruch 1 bis 9 als Holzklebstoffe, insbesondere Parkettklebstoffe.

12. Verwendung der Verfahrensprodukte nach Anspruch 1 bis 9 als Klebemittel für Fasermaterialien.

13. Verwendung der Verfahrensprodukte nach Anspruch 1 bis 9 als Klebemittel im Baubereich, insbesondere Fliesenkleber.

## Claims

1. Process for preparing adhesives having improved adhesion, in the form of their aqueous dispersions or water-redispersible dispersion powders, by emulsion polymerization of one or more monomers from the group consisting of the vinyl esters of unbranched and branched carboxylic acids of 1 to 12 carbon atoms, the esters of acrylic acid and methacrylic acid with branched and unbranched alcohols of 1 to 12 carbon atoms, vinylaromatic compounds, vinyl halides, dienes and alpha-olefins in the presence of polyvinyl alcohol and, where appropriate, drying of the dispersion thus obtainable, **characterized in that**, after the end of the polymerization, from 0.3 to 3.0% by weight, based on the overall weight of the dispersion, of one or more emulsifiers from the group consisting of alkyl sulphates of 8 to 18 carbon atoms, alkyl and alkylaryl ether sulphates of 8 to 18 carbon atoms in the hydrophobic radical and from 1 to 50 ethylene oxide units, alkylsulphonates of 8 to 18 carbon atoms, alkylarylsulphonates of 8 to 18 carbon atoms, esters and monoesters of sulfosuccinic acid with monohydric alcohols or alkylphenols having 4 to 15 carbon atoms, in the alkyl radical, alkyl and alkylaryl phosphates having 8 to 20 carbon atoms in the organic radical, alkyl ether and alkylaryl ether phosphates having 8 to 20 carbon atoms in the alkyl or alkylaryl radical and from 1 to 50 EO units, alkyl polyglycol ethers preferably having from 5 to 40 EO units and alkyl radicals of 8 to 20 carbon atoms in the alkyl and aryl radicals.

2. Process according to Claim 1, **characterized in that** monomers polymerized comprise compositions with vinyl acetate; or vinyl acetate and ethylene with from 40 to 99% by weight of vinyl acetate and an ethylene content of from 1 to 60% by weight; or ethylene and vinyl chloride with an ethylene content of from 1 to 40% by weight and a vinyl chloride content of from 50 to 90% by weight; or vinyl acetate and further vinyl esters with from 30 to 75% by weight of vinyl acetate and from 1 to 50% by weight of one or more copolymerizable vinyl esters from the group consisting of vinyl laurate, vinyl pivalate, vinyl 2-ethylhexanoate, and vinyl esters of an alpha-branched carboxylic acid of 5 to 11 carbon atoms, with or without from 1 to 40% by weight of ethylene in addition; or styrene and butadiene with a styrene content of from 10 to 70% by weight; or styrene and acrylates with a styrene content of in each case from 10 to 70% by weight; in the presence if desired of auxiliary monomers.

3. Process according to Claim 2, **characterized in that** auxiliary monomers copolymerized comprise postcrosslinking comonomers such as acrylamidoglycolic acid, methacrylamidoglycolic acid methyl ester, N-methylolacrylamide, N-methylolmethacrylamide, N-methylol allylcarbamate, alkyl ethers of N-methylolacrylamide, N-methylolmethacrylamide and/or precrosslinking, polyethylenically unsaturated comonomers such as divinyl adipate, diallyl maleate, allyl methacrylate and triallyl cyanurate in an amount of from 0.05 to 10.0% by weight, based on the overall weight of the monomers.

4. Process according to Claim 3, **characterized in that**, as emulsifiers, nonylphenol ethoxylates and isotridecyl ethoxylates having from 1 to 50 ethylene oxide units, esters and monoesters of sulfosuccinic acid with monohydric alcohols, alkylphenols having 4 to 15 carbon atoms in the alkyl radical or ethoxylated alcohols are added to the aqueous dispersion after the end of the polymerization.

5. Process according to Claim 1 to 4, **characterized in that** after the end of the polymerization from 0.6 to 1.5% by weight, based on the overall weight of the dispersion, of emulsifier are added to the dispersion.

6. Process according to Claim 1 to 5, **characterized in that** polymerization is conducted in the presence of partially hydrolysed polyvinyl alcohols containing from 75 to 95 mol% of vinyl alcohol units and having a Höppler viscosity of from 3 to 60 mPas.

7. Process according to Claim 6, **characterized in that** the partially hydrolysed polyvinyl alcohols containing from 75 to 95 mol% of vinyl alcohol units are used in combination with fully hydrolysed polyvinyl alcohols having a degree of hydrolysis of greater than 95 mol% to 100 mol%.

8. Process according to Claim 1 to 7, **characterized in that** the polymerization is conducted in the presence of anionic, cationic or nonionic emulsifiers.

9. Process according to Claim 1 to 8, **characterized in that**, in order to prepare adhesives in powder form, the emulsifier-modified aqueous dispersion is dried.

10. Use of the process products according to Claim 1 to 9 as paper adhesives, packaging adhesives and bookbinding adhesives.

11. Use of the process products according to Claim 1 to 9 as wood adhesives, especially parquet adhesives.

12. Use of the process products according to Claim 1 to 9 as adhesives for fibre materials.

13. Use of the process products according to Claim 1 to 9 as adhesives in the construction sector, especially tile adhesives.

## Revendications

1. Procédé pour la production d'adhésifs à adhérence améliorée, sous forme de leurs dispersions aqueuses ou de leurs poudres de dispersion redispersables dans l'eau, par polymérisation en émulsion d'un ou plusieurs monomères choisis dans le groupe des esters vinyliques d'acides carboxyliques ramifiés ou non ramifiés ayant de 1 à 12 atomes de carbone, des esters de l'acide acrylique et de l'acide méthacrylique avec des alcools ramifiés ou non ramifiés ayant de 1 à 12 atomes de carbone, des composés vinylaromatiques, des halogénures de vinyle, des diènes et des α-oléfines, en présence de poly(alcool vinylique), et éventuellement séchage de la dispersion pouvant être ainsi obtenue, **caractérisé en ce que**, une fois terminée la polymérisation, on ajoute à la dispersion de 0,3 à 3,0 % en poids, par rapport au poids total de la dispersion, d'un ou plusieurs émulsifiants choisis dans le groupe comprenant des sulfates d'alkyle ayant de 8 à 18 atomes de carbone, des alkyl- et alkylaryléthersulfates ayant de 8 à 18 atomes de carbone dans le radical hydrophobe et comportant de 1 à 50 groupes oxyde d'éthylène, des alkyl-sulfonates ayant de 8 à 18 atomes de carbone, des alkylarylsulfonates ayant de 8 à 18 atomes de carbone, des esters et hémiesters de l'acide sulfosuccinique avec des alcools monohydroxylés ou des alkylphénols ayant de 4 à 15 atomes de carbone dans le radical alkyle, des alkyl- et alkylarylphosphates ayant de 8 à 20 atomes de carbone dans le radical organique, des alkyléther- et alkylarylétherphosphates ayant de 8 à 20 atomes de carbone dans le radical alkyle ou alkylaryle et comportant de 1 à 50 groupes OE, des alkylpolyglycoléthers comportant de préférence de 5 à 40 groupes OE et des radicaux alkyle ayant de 8 à 20 atomes de carbone, des alkylarylpolyglycoléthers comportant de 5 à 40 groupes OE et ayant de 8 à 20 atomes de carbone dans les radicaux alkyle et aryle.

2. Procédé selon la revendication 1, **caractérisé en ce qu'**on polymérise en tant que monomères des compositions comportant de l'acétate de vinyle ; ou de l'acétate de vinyle et de l'éthylène ayant de 40 à 99 % en poids d'acétate de vinyle et une teneur en éthylène de 1 à 60 % en poids ; ou de l'éthylène et du chlorure de vinyle ayant une teneur en éthylène de 1 à 40 % en poids et une teneur en chlorure de vinyle de 50 à 90 % en poids ; ou de l'acétate de vinyle et d'autres esters vinyliques ayant de 30 à 75 % en poids d'acétate de vinyle et de 1 à 50 % en poids d'un ou plusieurs esters vinyliques copolymérisables, choisis dans le groupe comprenant le laurate de vinyle, le pivalate de vinyle, le 2-éthylhexanoate de vinyle, des esters vinyliques d'un acide carboxylique α-ramifié, ayant de 5 à 11 atomes de carbone, éventuellement encore 1 à 40 % en poids d'éthylène ; ou du styrène et du butadiène ayant une teneur en styrène de 10 à 70 % en poids ; ou du styrène et un ester d'acide acrylique ayant une teneur en styrène chaque fois de 10 à 70 % en poids ; éventuellement en présence de monomères auxiliaires.

3. Procédé selon la revendication 2, **caractérisé en ce que** sont copolymérisés en tant que monomères auxiliaires des comonomères à post-réticulation, tels que l'acide acrylamidoglycolique, le méthacrylamidoglycolate de méthyle, le N-méthylolacrylamide, le N-méthylolméthacrylamide, le N-méthylolallylcarbamate, des alkyléthers de N-méthylolacrylamide, N-méthylolméthacrylamide et/ou des comonomères à plusieurs insaturations éthylénique et à pré-réticulation, tels que l'adipate de divinyle, le maléate de diallyle, le méthacrylate d'allyle, le cyanurate de triallyle, en une quantité de 0,05 à 10,0 % en poids, par rapport au poids total des monomères.

4. Procédé selon la revendication 3, **caractérisé en ce que**, une fois terminée la polymérisation, on ajoute à la dispersion aqueuse, en tant qu'émulsifiants, des produits d'éthoxylation de nonylphénol et des produits d'éthoxylation d'alcool isotridécylique comportant de 1 à 50 groupes oxyde d'éthylène, des esters et hémiesters de l'acide sulfosuccinique avec des alcools monohydroxylés, des alkylphénols ayant de 4 à 15 atomes de carbone dans le radical alkyle ou des alcools éthoxylés.

5. Procédé selon l'une quelconque des revendications 1 à 4, **caractérisé en ce que**, une fois terminée la polymérisation, on ajoute à la dispersion de 0,6 à 1,5 % en poids, par rapport au poids total de la dispersion, d'émulsifiant.

6. Procédé selon l'une quelconque des revendications 1 à 5, **caractérisé en ce que** la polymérisation est effectuée en présence de poly(alcool vinylique)s partiellement saponifiés, ayant une teneur en groupes alcool vinylique de 75 à 95 % en moles et une viscosité Höppler de 3 à 60 mPa.s.

7. Procédé selon la revendication 6, **caractérisé en ce qu'**on utilise les poly(alcool vinylique)s partiellement saponifiés ayant une teneur de 75 à 95 % en moles de groupes alcool vinyliques, en association avec des poly(alcool vinylique)s totalement saponifiés ayant un degré d'hydrolyse de plus de 95 % en moles à 100 % en moles.

8. Procédé selon l'une quelconque des revendications 1 à 7, **caractérisé en ce que** la polymérisation est effectuée en présence d'émulsifiants anioniques, cationiques ou non ioniques.

9. Procédé selon l'une quelconque des revendications 1 à 8, **caractérisé en ce que**, pour la production d'adhésifs pulvérulents, on sèche la dispersion aqueuse modifiée avec un émulsifiant.

10. Utilisation des produits du procédé selon l'une quelconque des revendications 1 à 9, en tant qu'adhésifs pour papier, adhésifs d'emballage et adhésifs pour reliures.

11. Utilisation des produits du procédé selon l'une quelconque des revendications 1 à 9, en tant qu'adhésifs pour bois, en particulier adhésifs pour parquets.

12. Utilisation des produits du procédé selon l'une quelconque des revendications 1 à 9, en tant qu'adhésif pour matériaux fibreux.

13. Utilisation des produits du procédé selon l'une quelconque des revendications 1 à 9, en tant qu'adhésif dans le domaine du bâtiment, en particulier colle pour carreaux.
